# EUROPEAN PATENT APPLICATION

(11) **EP 4 549 717 A2**
(43) Date of publication of application: **07.05.2025**
(21) Application number: 24210983.3
(22) Date of filing: 05.11.2024
(51) Int. Cl.: F02C 7/236

(54) **GAS TURBINE ENGINE FUEL SYSTEM FOR AN AIRCRAFT PROPULSION SYSTEM**

(30) Priority: 06.11.2023 US 202318387258
(71) Applicant: PRATT & WHITNEY CANADA CORP., Longueuil, Québec J4G 1A1 (CA)
(72) Inventor: WADDLETON, David, (01BE5) Longueuil, J4G 1A1 (CA)
(74) Representative: Dehns

(57) **Abstract**

A fuel system for a gas turbine engine (22) includes a fuel tank (58), a first fuel pump (66), an inlet ejector (68), and an ejector control valve (70). The first fuel pump (66) includes a fuel inlet (80) and a fuel outlet (92). The first fuel pump (66) is connected in fluid communication with the fuel tank (58) by an inlet conduit (84) at the fuel inlet (80). The first fuel pump (66) is connected in fluid communication with an outlet conduit (86) at the fuel outlet (92). The inlet ejector (68) includes an ejector nozzle (88) disposed within the inlet conduit (84). The ejector control valve (70) is connected in fluid communication between the ejector nozzle (88) and the outlet conduit (86), and the ejector control valve (70) is selectively positionable in an open position or a closed position to control a flow of fuel from the outlet conduit (86) through the ejector nozzle (88) to the inlet conduit (84).

## Description

### TECHNICAL FIELD

This disclosure relates generally to a fuel system for a gas turbine engine of an aircraft and, more particularly, to an inlet ejector assembly for a fuel system pump.

### BACKGROUND OF THE ART

Engines, such as those used for aircraft propulsion, include fuel systems configured to control fuel pressure, fuel flow rate, fuel temperature, and other fuel parameters to facilitate suitable operation of the engines. Various fuel system configurations are known in the art. While these known fuel systems have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present invention, a fuel system for a gas turbine engine includes a fuel tank, a first fuel pump, an inlet ejector, and an ejector control valve. The first fuel pump includes a fuel inlet and a fuel outlet. The first fuel pump is connected in fluid communication with the fuel tank by an inlet conduit at the fuel inlet. The first fuel pump is connected in fluid communication with an outlet conduit at the fuel outlet. The inlet ejector includes an ejector nozzle disposed within the inlet conduit. The ejector control valve is connected in fluid communication between the ejector nozzle and the outlet conduit, and the ejector control valve is selectively positionable in an open position or a closed position to control a flow of fuel from the outlet conduit through the ejector nozzle to the inlet conduit.

In an embodiment of the above, the fuel system may further include a second fuel pump. The first fuel pump may be connected in fluid communication with the second fuel pump by the outlet conduit.

In any of the aspects or embodiments described above and herein, the fuel system may further include a fuel injector assembly. The fuel injector assembly may be connected in fluid communication between the second fuel pump and a combustor of the gas turbine engine. The fuel injector assembly may be configured to direct the fuel into a combustion chamber of the combustor.

In any of the aspects or embodiments described above and herein, the first fuel pump may be a non-positive displacement pump.

In any of the aspects or embodiments described above and herein, the fuel tank may include one or more vents.

In any of the aspects or embodiments described above and herein, the ejector nozzle may include a nozzle fuel inlet and a nozzle fuel outlet. The nozzle fuel inlet may be connected in fluid communication with the ejector control valve. The nozzle fuel outlet may be disposed within the inlet conduit.

In any of the aspects or embodiments described above and herein, the fuel system may further include a controller connected in signal communication with the ejector control valve. The controller may include a processor in communication with a non-transitory memory storing instructions, which instructions when executed by the processor, may cause the processor to control the ejector control valve in the open position or the closed position based on one or more operational parameters of the gas turbine engine.

In any of the aspects or embodiments described above and herein, the fuel system may further include a pressure sensor connected in signal communication with the controller. The pressure sensor may be connected in fluid communication with the first fuel pump downstream of the fuel outlet. The instructions, when executed by the processor, may further cause the processor to control the ejector control valve in the open position or the closed position based on a measured fuel pressure from the pressure sensor.

In any of the aspects or embodiments described above and herein, the fuel system may include a second fuel pump. The first fuel pump may be connected in fluid communication with the second fuel pump by the outlet conduit. The pressure sensor may be disposed at a discharge of the second fuel pump.

In any of the aspects or embodiments described above and herein, the instructions, when executed by the processor, may further cause the processor to control the ejector control valve in the open position when the measured fuel pressure is greater than or equal to a first pressure threshold.

In any of the aspects or embodiments described above and herein, the instructions, when executed by the processor, may further cause the processor to control the ejector control valve in the shut position when the measured fuel pressure is less than or equal to a second pressure threshold. The second pressure threshold may be less than the first pressure threshold.

In any of the aspects or embodiments described above and herein, the ejector control valve may be positionable in a plurality of intermediate positions between the open position and the closed position. The instructions, when executed by the processor, may further cause the processor to control the ejector control valve in the open position, the closed position, or one of the plurality of intermediate positions based on one or more operational parameters of the gas turbine engine to modulate a rate of the flow of fuel from the outlet conduit through the ejector nozzle to the inlet conduit.

According to another aspect of the present invention, a method for operating a fuel system for a gas turbine engine is provided. The method includes pumping a fuel from a fuel tank to a combustor with a first fuel pump and positioning an ejector control valve in an open position, a closed position, or one of a plurality of intermediate positions between the open position and the closed position to control a flow of the fuel through a inlet ejector from a first location downstream of the first fuel pump, through a fuel outlet of the inlet ejector, and to a second location upstream of the first fuel pump. The fuel outlet is disposed at the second location within an inlet conduit at the first fuel pump.

In an embodiment of the above, positioning the ejector control valve in the open position, the closed position, or the one of the plurality of intermediate positions includes positioning the ejector control valve in the open position when a fluid pressure of the fuel is greater than or equal to a first pressure threshold.

In any of the aspects or embodiments described above and herein, positioning the ejector control valve in the open position, the closed position, or the one of the plurality of intermediate positions includes positioning the ejector control valve in the closed position when the fluid pressure of the fuel is less than or equal to a second pressure threshold.

In any of the aspects or embodiments described above and herein, the method may further include venting the fuel tank to atmosphere while pumping the fuel from the fuel tank to the combustor with the first fuel pump and positioning the ejector control valve in the open position, the closed position, or the one of the plurality of intermediate positions to control the flow of the fuel through the inlet ejector.

According to another aspect of the present invention, a gas turbine engine for an aircraft propulsion system includes a vented fuel tank, a first fuel pump and a second fuel pump, an inlet ejector, and an ejector control valve. The first fuel pump includes a fuel inlet and a fuel outlet. The fuel inlet is connected in fluid communication with the vented fuel tank. The fuel outlet is connected in fluid communication with the second fuel pump. The inlet ejector includes an ejector nozzle. The ejector nozzle includes an ejector nozzle inlet and an ejector nozzle outlet. The ejector nozzle outlet is disposed in fluid communication with the first fuel pump at the fuel inlet. The ejector control valve is connected in fluid communication between the fuel outlet and the ejector nozzle inlet. The ejector control valve is selectively positionable in an open position or a closed position to control a flow of fuel from the fuel outlet, through the ejector nozzle, and to the ejector nozzle outlet.

In an embodiment of the above, the gas turbine engine may further include a rotational assembly and a gearbox. The rotational assembly may include a shaft, a bladed compressor rotor, and a bladed turbine rotor. The gearbox may be operably connected to rotational assembly and the first fuel pump such that rotation of the rotational assembly drives the first fuel pump.

In any of the aspects or embodiments described above and herein, the gearbox may be operably connected to the second fuel pump such that rotation of the rotational assembly drives the second fuel pump.

In any of the aspects or embodiments described above and herein, the gas turbine engine may further include a fuel injector assembly and a combustor. The fuel injector assembly is connected in fluid communication between the second fuel pump and the combustor. The fuel injector assembly may be configured to direct the fuel into a combustion chamber of the combustor.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a cutaway, side view of an aircraft propulsion system including a gas turbine engine, in accordance with one or more embodiments of the present disclosure.
FIG. 2 illustrates a block diagram depicting a fuel system for the gas turbine engine of FIG. 1, in accordance with one or more embodiments of the present disclosure.
FIG. 3 schematically illustrates a portion of the fuel system of FIG. 2, in accordance with one or more embodiments of the present disclosure.
FIG. 3A schematically illustrates a portion of the fuel system of FIG. 2, in accordance with one or more embodiments of the present disclosure.

### DETAILED DESCRIPTION

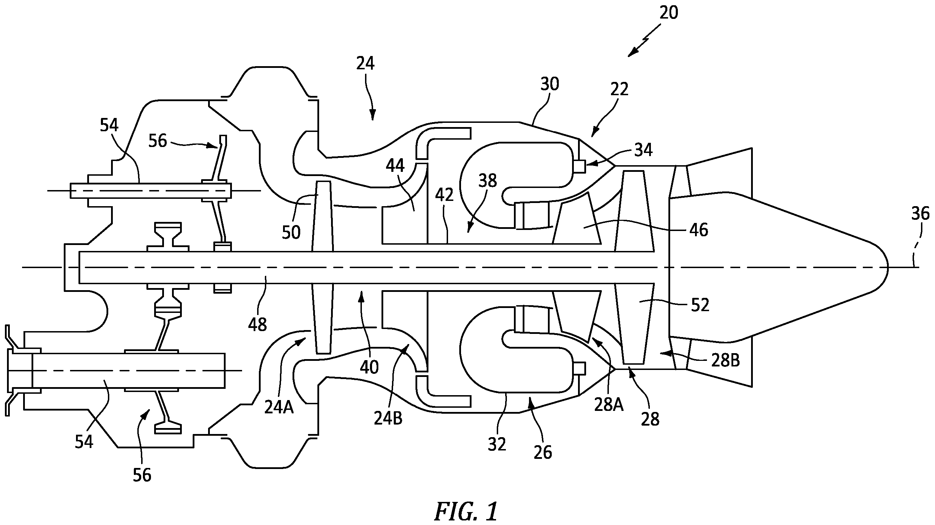

FIG. 1 schematically illustrates a cutaway side view of a propulsion system 20 for an aircraft. Briefly, the aircraft may be configured as a rotary-wing aircraft (e.g., a helicopter), a fixed-wing aircraft (e.g., an airplane), a tilt-rotor aircraft, a tilt-wing aircraft, or another aerial vehicle.

The propulsion system 20 of FIG. 1 includes a gas turbine engine 22. The gas turbine engine 22 includes a compressor section 24, a combustor section 26, a turbine section 28, and an engine static structure 30. The compressor section 24 includes a low-pressure compressor 24A and a high-pressure compressor 24B. The combustor section 26 includes a combustor 32 (e.g., an annular combustor) and a fuel system 34 configured to direct fuel into the combustor 32. The turbine section 28 includes a high-pressure turbine 28A and a low-pressure turbine 28B. The gas turbine engine 22 sections 24, 26, 28 of FIG. 1 are sequentially arranged along an axial centerline 36 (e.g., a rotational axis) of the gas turbine engine 22. The engine static structure 30 may include, for example, one or more engine cases for the gas turbine engine 22. The engine static structure 30 may additionally include cowlings, bearing assemblies, or other structural components of the gas turbine engine 22. The engine static structure 30 houses and structurally supports the engine sections 24, 26, 28.

Components of the engine sections 24, 28 form a first rotational assembly 38 (e.g., a high-pressure spool) and a second rotational assembly 40 (e.g., a low-pressure spool). The first rotational assembly 38 and the second rotational assembly 40 are mounted for rotation about the axial centerline 36 relative to the engine static structure 30.

The first rotational assembly 38 includes a first shaft 42, a bladed first compressor rotor 44 for the high-pressure compressor 24B, and a bladed first turbine rotor 46 for the high-pressure turbine 28A. The first shaft 42 interconnects the bladed compressor rotor 44 and the bladed first turbine rotor 46.

The second rotational assembly 40 includes a second shaft 48, a bladed second compressor rotor 50 for the low-pressure compressor 24A, and a bladed second turbine rotor 52 for the low-pressure turbine 28B. The second shaft 48 interconnects the bladed second compressor rotor 50 and the bladed second turbine rotor 52. The second shaft 48 is operably connected to one or more output shafts 54 of the propulsion system 20. For example, the second shaft 48 may be operably connected to the output shafts 54 by one or more respective gear assemblies 56 (e.g., gearbox assemblies). Each of the output shafts 54 may be configured for driving a propulsor (e.g., a propeller, a main rotor, a tail rotor, etc.), one or more auxiliary loads (e.g., pumps, generators, etc.), or other rotational loads of the propulsion system 20. The first shaft 42 and the second shaft 48 of FIG. 1 are concentric and configured to rotate about the axial centerline 36. The present disclosure, however, is not limited to the foregoing exemplary configuration of the gas turbine engine 22.

During operation of the gas turbine engine 22, ambient air is directed into the compressor section 24. The air is compressed in the low-pressure compressor 24A and the high-pressure compressor 24B and directed into a combustion chamber of the combustor 32. Fuel is injected into the combustion chamber by the fuel system 34 and mixed with the compressed air to provide a fuel-air mixture. This fuel-air mixture is ignited and combustion products thereof flow through and sequentially cause the bladed first turbine rotor 46 and the bladed second turbine rotor 52 to rotate. The rotation of the bladed first turbine rotor 46 and the bladed second turbine rotor 52 respectively drives rotation of the first rotational assembly 38 and the second rotational assembly 40.

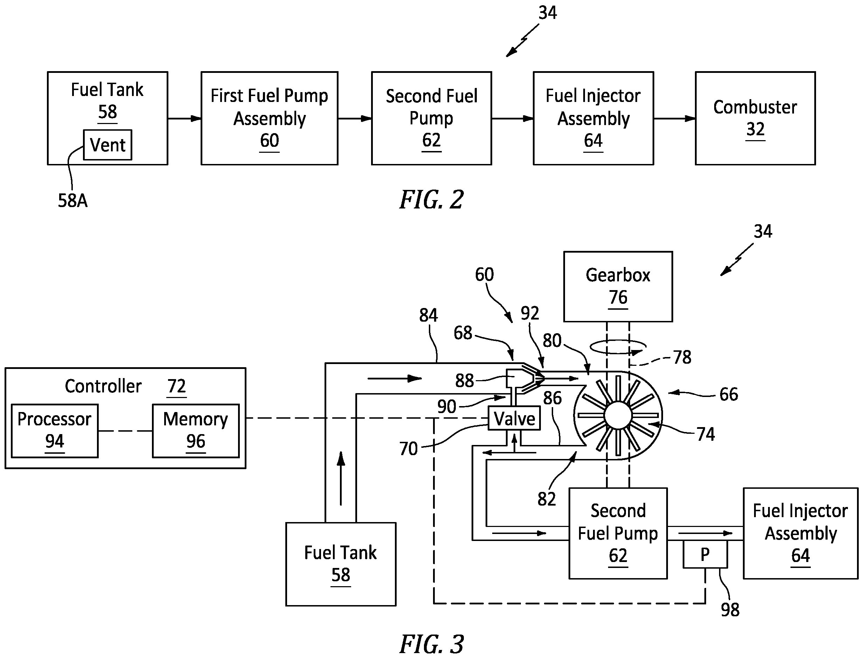

FIG. 2 illustrates a block diagram depicting the fuel system 34 for the gas turbine engine 22. The fuel system 34 of the present disclosure, however, is not limited to use with gas turbine engines (e.g., the gas turbine engine 22) and may also be used with other engines (e.g., rotary engines, piston engines, etc.) for aircraft or aircraft propulsion systems. The fuel system 34 of FIG. 2 includes a fuel tank 58, a first fuel pump assembly 60, a second fuel pump 62 (e.g., a high-pressure pump), and a fuel injector assembly 64. The fuel tank 58 may include one or more vents 58A such that the contents of the fuel tank 58 are maintained at or near atmospheric pressure. In some embodiments, the fuel system 34 may include a plurality of fuel tanks 58 (e.g., one or more main fuel tanks and one or more auxiliary fuel tanks), however, the present disclosure is not limited to any particular number or configuration of the fuel tank 58. The first fuel pump assembly 60 is configured to draw fuel from the fuel tank 58 and direct the fuel to the second fuel pump 62 at an elevated pressure relative to the fuel tank 58, as will be discussed in further detail. The second fuel pump 62 may be configured as a positive displacement pump. The second fuel pump 62 is configured to further pressurize the fuel from the first fuel pump assembly 60 and direct the fuel to the fuel injector assembly 64. The fuel injector assembly 64 directs the pressurized, metered fuel into the combustor 32 for combustion, as described above.

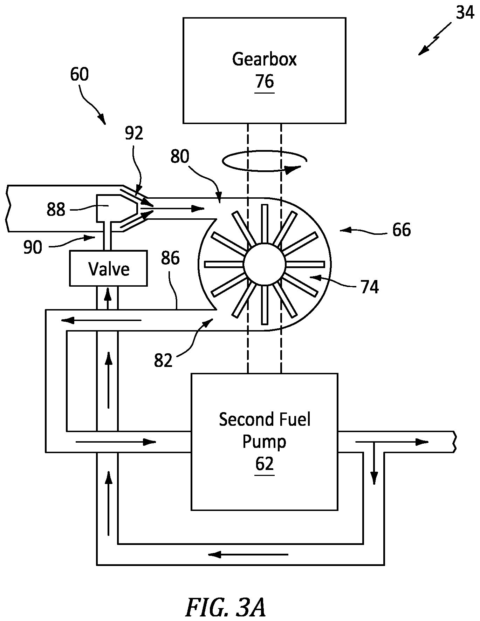

FIG. 3 schematically illustrates the first fuel pump assembly 60 and other components of the fuel system 34 in greater detail. The first fuel pump assembly 60 of FIG. 3 includes a first fuel pump 66 (e.g., a low-pressure pump), an inlet ejector 68, and an ejector control valve 70. The first fuel pump assembly 60 may further include a controller 72.

The first fuel pump 66 of FIG. 3 is configured as a centrifugal pump. However, the present disclosure is not limited to the foregoing exemplary configuration of the first fuel pump 66. For example, the first fuel pump 66 may alternatively be configured as a regenerative pump, a liquid-ring pump, or the like (e.g., a positive displacement pump or a non-positive displacement pump). The first fuel pump 66 includes an impeller 74 (sometime referred to as a "wheel") configured for rotation to draw fuel from the fuel tank 58 and direct (e.g., pump) the fuel to the second fuel pump 62. The impeller 74 of FIG. 3 is operably connected with a gearbox 76 (e.g., an accessory gearbox) by a shaft 78. The gearbox 76 operably connected to one of the output shafts 54 (see FIG. 1) to drive the gearbox 76 and, in turn, drive rotation of the impeller 74. In some embodiments, the second fuel pump 62 may also be operably connected to and driven by the gearbox 76 (e.g., by the shaft 78 or another shaft). The present disclosure is not limited to the foregoing exemplary configuration of the impeller 74 with the gearbox 76. For example, the impeller 74 may alternatively be driven by an electric motor or another rotational power source of the propulsion system 20 (see FIG. 1). The first fuel pump 66 includes a fuel inlet 80 and a fuel outlet 82. The fuel inlet 80 is connected in fluid communication with the fuel tank 58 by an inlet conduit 84. The fuel outlet 82 is connected in fluid communication with the second fuel pump 62 by an outlet conduit 86. The inlet conduit 84 and the outlet conduit 86 may be formed by one or more pipes, hoses, tubes, or another suitable fluid conduits, and/or combinations thereof. It should be understood that the fuel system 34 may include one or more intermediate fuel components between the fuel tank 58 and the first fuel pump 66 and/or between the first fuel pump 66 and the second fuel pump 62 such as, but not limited to, a fuel filter, a heat exchanger, a fuel flow regulator, a fuel relief valve, or the like.

The inlet ejector 68 includes an ejector nozzle 88. The ejector nozzle 88 is disposed within the inlet conduit 84. The ejector nozzle 88 is spaced from the inlet conduit 84 (e.g., walls of the inlet conduit 84) to allow fuel from the fuel tank 58 to flow through the inlet conduit 84 and around the ejector nozzle 88 to the first fuel pump 66. The ejector nozzle 88 includes a fuel inlet 90 and a fuel outlet 92. The fuel inlet 90 is selectively connected in fluid communication with the outlet conduit 86 by the ejector control valve 70. As shown in FIG. 3A, the fuel inlet 90 may alternatively be connected in fluid communication with a discharge of the second fuel pump 62 at (e.g., on, adjacent, or proximate) an outlet of the second fuel pump 62. The fuel outlet 92 is disposed within the inlet conduit 84. The fuel outlet 92 is configured to direct fuel (e.g., from the outlet conduit 86) to the fuel inlet 80 of the first fuel pump 66.

The ejector control valve 70 is connected in fluid communication with and between the outlet conduit 86 and the ejector nozzle 88. The ejector control valve 70 is selectively positionable to direct and control fuel flow to the ejector nozzle 88 from the outlet conduit 86. The ejector control valve 70 is positionable in an open position and a closed position. In the open position, the ejector control valve 70 is configured to direct fuel from the outlet conduit 86 to the ejector nozzle 88 (e.g., the fuel inlet 90). In the closed position, the ejector control valve 70 is configured to prevent (e.g., obstruct) all or substantially all fuel flow from the outlet conduit 86 to the ejector nozzle 88 (e.g., the fuel inlet 90). The ejector control valve 70 may additionally be positionable in one or more intermediate positions between the open position and the closed position to control (e.g., modulate) a rate of fuel flow from the outlet conduit 86 to the ejector nozzle 88 (e.g., the fuel inlet 90). The ejector control valve 70 may be configured as a solenoid valve. Alternatively, the ejector control valve 70 may be configured as a hydraulically operated valve, a pneumatically-operated valve, or another suitable valve configuration for facilitating remote operation of the ejector control valve 70. The ejector control valve 70 may be remotely controlled by a pilot or other operator to control fuel flow through the ejector nozzle 88. Alternatively, the ejector control valve 70 may be controlled by one or more electronic control systems (e.g., the controller 72).

The controller 72 includes a processor 94 connected in signal communication with memory 96. The processor 94 may include any type of computing device, computational circuit, processor(s), CPU, computer, or the like capable of executing a series of instructions that are stored in the memory 96. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the first fuel pump assembly 60 and its components to accomplish the same algorithmically and/or by coordination of the first fuel pump assembly 60 components. For example, the controller 72 may be connected in electrical (e.g., signal) communication with the ejector control valve 70 or an actuator (e.g., a hydraulic actuator, a pneumatic actuator, an electro-mechanical actuator, etc.) for the ejector control valve 70 to control a position of the ejector control valve 70. The memory 96 may include a single memory device or a plurality of memory devices (e.g., a computer-readable storage device that can be read, written, or otherwise accessed by a general purpose or special purpose computing device), including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 72. The controller 72 may include, or may be in communication with, an input device that enables a user to enter data and/or instructions, and may include, or be in communication with, an output device configured, for example to display information (e.g., a visual display or a printer), or to transfer data, etc. Communications between the controller 72 and other electrical and/or electronic components (e.g., controllers, sensors, etc.) may be via a hardwire connection or via a wireless connection. A person of skill in the art will recognize that portions of the controller 72 may assume various forms (e.g., digital signal processor, analog device, etc.) capable of performing the functions described herein.

The controller 72 may form or otherwise be part of an electronic engine controller (EEC) for the gas turbine engine 22. For example, the EEC may control aspects of the gas turbine engine 22 operation such as, but not limited to, fuel flow, stator vane position (e.g., variable compressor inlet guide vane (IGV) position), compressor air bleed valve position, shaft (e.g., first shaft 42 and/or second shaft 48) torque and/or rotation speed, etc. so as to control an engine power or performance of the gas turbine engine 22. For example, the EEC may modulate fuel flow to the combustor 32 to obtain a desired output power of the gas turbine engine 22. In some embodiments, the EEC may be part of a full authority digital engine control (FADEC) system for the propulsion system 20.

The controller 72 may be connected in signal communication with one or more sensors of the propulsion system 20, the gas turbine engine 22, the fuel system 34, and/or the aircraft on which the propulsion system 20 is installed. For example, the controller 72 of FIG. 3 is connected in signal communication with a pressure sensor 98 (e.g., a pressure transducer) at (e.g., on, adjacent, or proximate) a fuel outlet of the second fuel pump 62 to measure the second fuel pump 62 discharge pressure. The controller 72 may be configured to measurement signals (e.g., from the one or more sensors) for operational parameters of the propulsion system 20, the gas turbine engine 22, the fuel system 34, and/or the aircraft on which the propulsion system 20 is installed, which operational parameters may be representative of, proportional to, or otherwise useful for deriving a pressure of the fuel at (e.g., on, adjacent, or proximate) the fuel inlet 80. For example, the controller 72 may receive or calculate operational parameters such as, but not limited to gas turbine engine 22 power, altitude, gas turbine engine 22 air pressure (e.g., low-pressure compressor 24A and/or high-pressure compressor 24B outlet pressure), fuel temperature within the fuel system 34, second fuel pump 62 discharge pressure, and/or other sensor output or calculated values which may be used by the controller 72 to control the operation of components of the first fuel pump assembly 60 (e.g., the ejector control valve 70).

During operation of the gas turbine engine 22 (see FIG. 1) and its fuel system 34, the first fuel pump 66 (e.g., the impeller 74) operates to draw fuel from the fuel tank 58, as described above. The fuel stored within the fuel tank 58 may, over time, absorb and become saturated with air (e.g., mainly nitrogen, oxygen, and argon). During some operation conditions of the gas turbine engine 22 (e.g., altitude and fuel flow rate), a reduction in fluid pressure of the fuel as the fuel is drawn from the fuel tank 58 toward the first fuel pump 66 may cause the some or all of the air absorbed by the fuel to evolve from the fuel. The amount of air evolution depends, for example, upon the reduction in pressure and the initial air saturation level of the fuel. An excessive amount of air evolution from the fuel may cause the first fuel pump 66 to supply (e.g., pump) insufficient liquid fuel to the second fuel pump 62, and hence to the fuel injector assembly 64, thereby preventing the engine 22 from maintaining a correct (e.g., commanded) operating power condition.

The inlet ejector 68 mixes fuel drawn from the outlet conduit 86 (e.g., downstream of the first fuel pump 66) with fuel drawn from the fuel tank 58 in the inlet conduit 84 before this fuel reaches the fuel inlet 80 of the first fuel pump 66. The fuel mixing effected by the inlet ejector 68 breaks down large air bubbles entrained in the fuel being drawn from the fuel tank 58 to reduce the V/L ratio of the fuel and increases the fluid pressure of the fuel entering the first fuel pump 66 (e.g., the fuel inlet 80). The reduction in fluid pressure of the fuel as the fuel is drawn from the fuel tank 58 is, in part, a function of the fuel flow rate (e.g., the engine burn flow) through the fuel system 34 and a difference in elevation between a free surface of fuel within the fuel tank 58 and the inlet conduit 84. As such, the inlet ejector 68 is primarily beneficial for reducing the fuel V/L ratio of the fuel and increasing the fluid pressure of the fuel at higher gas turbine engine 22 power levels where the high fuel flow rate tends to significantly reduce the fluid pressure of the fuel drawn from the fuel tank 58. However, at lower gas turbine engine 22 power levels (e.g., lower fuel flow rates) the operation of the inlet ejector 68 can detrimentally introduce heated fuel from the first fuel pump 66 discharge (e.g., the fuel outlet 82) into the relatively lower pressure and cooler fuel in the inlet conduit 84, thereby causing the fuel to boil (e.g., flash) prior to entering the first fuel pump 66.

The ejector control valve 70, as previously discussed, is configured to direct and control fuel flow from the outlet conduit 86 through the inlet ejector 68 (e.g., the ejector nozzle 88). At relatively higher gas turbine engine 22 power levels, the ejector control valve 70 may be positioned in the open position to direct fuel through the inlet ejector 68 to break up air bubbles evolved from the fuel within the inlet conduit 84. At relatively lower gas turbine engine 22 power levels, where air evolved from the fuel may be accommodated by the first fuel pump 66, the ejector control valve 70 may be positioned in the closed position or an intermediate position to prevent or reduce the flow of fuel into and through the inlet ejector 68.

The controller 72 may control a position of the ejector control valve 70 to control a flow rate of the fuel through the inlet ejector 68 based on one or more operational parameters of the gas turbine engine 22 and/or the fuel system 34. For example, the controller 72 may control the position of the ejector control valve 70 using the second fuel pump 62 discharge pressure (e.g., from the pressure sensor 98). The controller 72 may control the ejector control valve 70 in the open position where the second fuel pump 62 discharge pressure is greater than or equal to a first pressure threshold. The controller 72 may control the ejector control valve 70 in the shut position where the second fuel pump 62 discharge pressure is less than or equal to a second pressure threshold which is less than the first pressure threshold. The controller 72 may control the ejector control valve 70 in an intermediate position where the second fuel pump 62 discharge pressure is between the first pressure threshold and the second pressure threshold, for example, to modulate fuel flow directed through the inlet ejector 68.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A fuel system for a gas turbine engine, the fuel system comprising:
a fuel tank (58);
a first fuel pump (66) including a fuel inlet (80) and a fuel outlet (92), the first fuel pump (66) is connected in fluid communication with the fuel tank (58) by an inlet conduit (84) at the fuel inlet (80), and the first fuel pump (66) is connected in fluid communication with an outlet conduit (86) at the fuel outlet (92);
an inlet ejector (68) including an ejector nozzle (88) disposed within the inlet conduit (84); and
an ejector control valve (70) connected in fluid communication between the ejector nozzle (88) and the outlet conduit (86), and the ejector control valve (70) is selectively positionable in an open position or a closed position to control a flow of fuel from the outlet conduit (86) through the ejector nozzle (88) to the inlet conduit (84).

2. The fuel system of claim 1, further comprising a second fuel pump (62), and the first fuel pump (66) is connected in fluid communication with the second fuel pump (62) by the outlet conduit (86), optionally further comprising a fuel injector assembly (64), the fuel injector assembly (64) is connected in fluid communication between the second fuel pump (62) and a combustor (32) of the gas turbine engine (22), and the fuel injector assembly (64) is configured to direct the fuel into a combustion chamber of the combustor (32).

3. The fuel system of claim 1 or 2, wherein the first fuel pump (66) is a non-positive displacement pump.

4. The fuel system of any preceding claim, wherein the fuel tank (58) includes one or more vents (58A).

5. The fuel system of any preceding claim, wherein the ejector nozzle (88) includes a nozzle fuel inlet (90) and a nozzle fuel outlet (92), the nozzle fuel inlet (90) is connected in fluid communication with the ejector control valve (70), and the nozzle fuel outlet (92) is disposed within the inlet conduit (84).

6. The fuel system of any preceding claim, further comprising a controller (72) connected in signal communication with the ejector control valve (70), the controller (72) includes a processor (94) in communication with a non-transitory memory (96) storing instructions, which instructions when executed by the processor (94), cause the processor (94) to control the ejector control valve (70) in the open position or the closed position based on one or more operational parameters of the gas turbine engine (22).

7. The fuel system of claim 6, further comprising a pressure sensor (98) connected in signal communication with the controller (72), and the pressure sensor (98) is connected in fluid communication with the first fuel pump (66) downstream of the fuel outlet (92), wherein the instructions, when executed by the processor (94), further cause the processor (94) to control the ejector control valve (70) in the open position or the closed position based on a measured fuel pressure from the pressure sensor (98).

8. The fuel system of claim 7, further comprising a second fuel pump (62), the first fuel pump (66) is connected in fluid communication with the second fuel pump (62) by the outlet conduit (86), and the pressure sensor (98) is disposed at a discharge of the second fuel pump (62).

9. The fuel system of claim 7 or 8, wherein the instructions, when executed by the processor (94), further cause the processor (94) to control the ejector control valve (70) in the open position when the measured fuel pressure is greater than or equal to a first pressure threshold, optionally wherein the instructions, when executed by the processor (94), further cause the processor (94) to control the ejector control valve (70) in the shut position when the measured fuel pressure is less than or equal to a second pressure threshold, and the second pressure threshold is less than the first pressure threshold.

10. The fuel system of any of claims 6 to 9, wherein the ejector control valve (70) is positionable in a plurality of intermediate positions between the open position and the closed position, and the instructions, when executed by the processor (94), further cause the processor (94) to control the ejector control valve (70) in the open position, the closed position, or one of the plurality of intermediate positions based on one or more operational parameters of the gas turbine engine (22) to modulate a rate of the flow of fuel from the outlet conduit (86) through the ejector nozzle (88) to the inlet conduit (84).

11. A method for operating a fuel system for a gas turbine engine, the method comprising:
pumping a fuel from a fuel tank (58) to a combustor (32) with a first fuel pump (66); and
positioning an ejector control valve (70) in an open position, a closed position, or one of a plurality of intermediate positions between the open position and the closed position to control a flow of the fuel through a inlet ejector (68) from a first location downstream of the first fuel pump (66), through a fuel outlet (92) of the inlet ejector (68), and to a second location upstream of the first fuel pump (66), and the fuel outlet (92) is disposed at the second location within an inlet conduit (84) at the first fuel pump (66).

12. The method of claim 11, wherein positioning the ejector control valve (70) in the open position, the closed position, or the one of the plurality of intermediate positions includes positioning the ejector control valve (70) in the open position when a fluid pressure of the fuel is greater than or equal to a first pressure threshold, optionally wherein positioning the ejector control valve (70) in the open position, the closed position, or the one of the plurality of intermediate positions includes positioning the ejector control valve (70) in the closed position when the fluid pressure of the fuel is less than or equal to a second pressure threshold.

13. The method of claim 11 or 12, further comprising venting the fuel tank (58) to atmosphere while pumping the fuel from the fuel tank (58) to the combustor (32) with the first fuel pump (66) and positioning the ejector control valve (70) in the open position, the closed position, or the one of the plurality of intermediate positions to control the flow of the fuel through the inlet ejector (68).

14. A gas turbine engine for an aircraft propulsion system, the gas turbine engine (22) comprising:
a vented fuel tank (58);
a first fuel pump (66) and a second fuel pump (62), the first fuel pump (66) includes a fuel inlet (80) and a fuel outlet (92), the fuel inlet (80) is connected in fluid communication with the vented fuel tank (58), and the fuel outlet (92) is connected in fluid communication with the second fuel pump (62);
an inlet ejector (68) including an ejector nozzle (88), the ejector nozzle (88) includes an ejector nozzle inlet and an ejector nozzle outlet, and the ejector nozzle outlet is disposed in fluid communication with the first fuel pump (66) at the fuel inlet (80); and
an ejector control valve (70) connected in fluid communication between the fuel outlet (92) and the ejector nozzle inlet, and the ejector control valve (70) is selectively positionable in an open position or a closed position to control a flow of fuel from the fuel outlet (92), through the ejector nozzle (88), and to the ejector nozzle outlet, optionally further comprising a fuel injector assembly (64) and a combustor (32), the fuel injector assembly (64) is connected in fluid communication between the second fuel pump (62) and the combustor (32), and the fuel injector assembly (64) is configured to direct the fuel into a combustion chamber of the combustor (32).

15. The gas turbine engine of claim 14, further comprising a rotational assembly (38) and a gearbox (76), the rotational assembly (38) includes a shaft (42), a bladed compressor rotor (44), and a bladed turbine rotor (46), the gearbox (76) is operably connected to rotational assembly (38) and the first fuel pump (66) such that rotation of the rotational assembly (38) drives the first fuel pump (66), optionally wherein the gearbox (76) is operably connected to the second fuel pump (62) such that rotation of the rotational assembly (38) drives the second fuel pump (62).
